# EUROPÄISCHE PATENTANMELDUNG

(11) **EP 1 561 523 A1**
(43) Veröffentlichungstag der Anmeldung: **10.08.2005**
(21) Anmeldenummer: 04029762.4
(22) Anmeldetag: 16.12.2004
(51) Int. Cl.: B21D 53/00, F16B 13/06

(54) **Verfahren zur Herstellung einer Spreizhülse und Spreizhülse**

(30) Priorität: 03.02.2004 DE 102004005398
(71) Anmelder: fischerwerke Artur Fischer GmbH & Co. KG, 72178 Waldachtal (DE)
(72) Erfinder: Schäffer, Marc, 72160 Horb-Bildechingen (DE); Thielemann, Martin, 1636 Olivos (BA) (AR)

(57) **Zusammenfassung**

Die Erfindung betrifft die Herstellung einer Spreizhülse (20) für einen Spreizanker (12). Die Erfindung schlägt vor, an einem Blechstreifen (20) durch Stanzen nicht durchgehender Querschlitze (24) Spreizzungen (26) zu stanzen und eine von einem Durchmesser des Spreizankers (12) abhängige Anzahl Spreizzungen (26) von dem Blechstreifen (22) abzutrennen und durch Biegen zu der Spreizhülse (20) umzuformen. Die Erfindung hat den Vorteil, dass die Spreizzungen (26) am Blechsteifen (22) unabhängig von einem Durchmesser des Spreizankers (12) gestanzt werden.

## Beschreibung

Die Erfindung betrifft ein Verfahren zur Herstellung einer Spreizhülse für einen Spreizanker sowie eine mit dem erfindungsgemäßen Verfahren hergestellte Spreizhülse.

Es sind Spreizanker zur Verankerung in einem hinterschnittenen oder nichthinterschnittenen Bohrloch bekannt. Die Spreizanker weisen einen Ankerbolzen mit einem Spreizkörper, üblicherweise in Form eines Spreizkonus, und einer axial auf dem Ankerbolzen verschiebbaren Spreizhülse auf. Nachfolgend wird vereinfachend von Spreizkonus die Rede zu sein ohne damit andere Formen des Spreizkörpers auszuschließen. Der Spreizkörper kann einstückig mit dem Ankerbolzen sein. Eine mehrstückige Ausbildung von Ankerbolzen und Spreizkonus ist bspw. durch Verschrauben des Spreizkonus mit dem Ankerbolzen möglich. Durch Aufschieben der Spreizhülse auf den Spreizkonus oder umgekehrt durch Einziehen des Spreizkonus in die Spreizhülse wird die Spreizhülse aufgespreizt und verankert den zuvor in das Bohrloch eingesetzten Spreizanker kraft- oder kraft- und formschlüssig in dem Bohrloch. Es ist bekannt, die Spreizhülse aus einem Blechstreifen herzustellen. An dem Blechstreifen werden durch Stanzen von nicht-durchgehenden Quer- oder Schrägschlitzen Spreizzungen ausgebildet, die, da die Quer- oder Schrägschlitze nicht durchgehend sind, einstückig miteinander verbunden sind. Nach einer stets gleichbleibenden Anzahl an Quer- oder Schrägschlitzen wird der Blechstreifen durchtrennt und der abgetrennte Abschnitt rohrförmig zu der Spreizhülse umgeformt, üblicherweise gebogen.

Für unterschiedliche Ankerdurchmesser sind unterschiedliche Hülsendurchmesser und damit unterschiedlich breite Spreizzungen erforderlich.

Der Erfindung liegt die Aufgabe zugrunde, ein vereinfachtes Verfahren zur Herstellung von vorstehend beschriebenen Spreizhülsen vorzuschlagen.

Diese Aufgabe wird erfindungsgemäß durch die Merkmale des Anspruchs 1 gelöst. Durch Stanzen von nicht durchgehenden Quer- oder Schrägschlitzen werden Spreizzungen an einem Blechstreifen gestanzt. Die Quer- oder Schrägschlitze können alle von einer Seite des Blechstreifens ausgehen, so dass die Spreizzungen alle an derselben Seite des Blechstreifens miteinander verbunden sind. Auch können die Quer- und Schrägschlitze bspw. abwechselnd von beiden Seiten oder auch stets von beiden Seiten, so dass die Spreizzungen in einem mittleren Bereichs des Blechstreifens miteinander verbunden sind, gestanzt sein. Vom den Blechstreifen wird ein Abschnitt abgetrennt, dessen Länge einem Umfang der herzustellenden Spreizhülse entspricht. Die Länge des vom Blechstreifen abgetrennten Abschnitts ist also abhängig vom Durchmesser der Spreizhülse bzw. vom Durchmesser des Ankerbolzens bzw. Spreizankers. Für unterschiedliche Ankerdurchmesser werden unterschiedlich lange Abschnitte von einem immer gleich gestanzten Blechstreifen abgetrennt. Die Erfindung hat den Vorteil, dass für unterschiedliche Ankerdurchmesser ein gleicher Blechstreifen verwendet werden kann, der außerdem für die verschiedenen Ankerdurchmesser gleich gestanzt wird. Dies vereinfacht Einkauf und Lagerhaltung, es ist nur ein Stanzwerkzeug zum Stanzen der Spreizzungen erforderlich und ein Umstellen der Herstellung auf einen anderen Ankerdurchmesser erfordert lediglich eine Veränderung der Länge des vom Blechstreifen abgetrennten Abschnitts. -

Vorzugsweise wird eine ganze Anzahl an Spreizzungen von dem Blechstreifen abgetrennt. Der Abschnitt wird insbesondere an einem der Quer- oder Schrägschlitze von dem Blechstreifen abgetrennt. Grundsätzlich ist allerdings auch ein Trennen des Blechstreifens innerhalb einer Spreizzunge möglich. Eine Anpassung von Spreizanker und Spreizhülse ist möglich, indem der Spreizkonus im Umfang und damit im Durchmesser an ein ganzzahliges Vielfaches einer Breite der Spreizzungen einschließlich einer Breite eines der Quer- oder Schrägschlitze angepasst ist. Eine Anpassung des Durchmessers der Spreizhülse an den Ankerdurchmesser ergibt sich dadurch, dass ein durchgehender Schlitz der Spreizhülse eine unterschiedliche Breite aufweisen kann. Der durchgehende Schlitz ergibt sich durch das Umformen des vom Blechstreifen abgetrennten Abschnitts zur Spreizhülse.

Die Ansprüche 3 und 4 haben eine nach dem erfindungsgemäßen Verfahren hergestellte Spreizhülse zum Gegenstand. Ihre Erläuterung ergibt sich aus der vorstehenden Erläuterung des erfindungsgemäßen Herstellungsverfahrens.

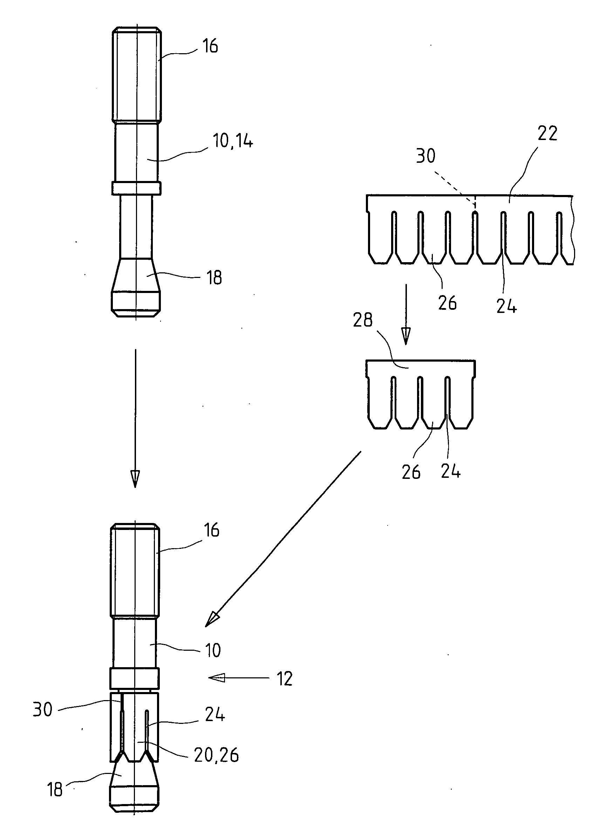

Die Erfindung wird nachfolgend anhand der Zeichnung näher erläutert. Die einzige Figur zeigt einen Ankerbolzen und verschiedene Herstellungsschritte einer erfindungsgemäßen Spreizhülse eines den Ankerbolzen und die Spreizhülse umfassenden Spreizankers. Die Zeichnung ist als Schemadarstellung zu verstehen und nicht maßstäblich.

Die Zeichnung zeigt links oben einen Ankerbolzen 10 eines links unten dargestellten Spreizankers 12. Der Ankerbolzen 10 weist einen Schaft 14 mit einem Gewinde 16 an einem hinteren und einem Spreizkonus 18 an einem vorderen Ende auf. Alle Elemente des Ankerbolzens 10 sind einstückig miteinander. Außer dem Ankerbolzen 10 weist der Spreizanker 12 eine erfindungsgemäße Spreizhülse 20 auf. Die Spreizhülse 20 ist aus einem in der Zeichnung rechts oben dargestellten Blechstreifen 22 durch Stanzen und Biegen hergestellt. In den Blechstreifen 22 werden in gleichen Abständen Querschlitze 24 gestanzt, die nicht über die Breite des Blechstreifens 22 durchgehen. Die Querschlitze teilen den Blechstreifen 22 in Spreizzungen 26, deren eines Ende frei ist und die an ihrem anderen Ende einstückig miteinander verbunden sind, weil die Querschlitze 24 nicht über die Breite des Blechstreifens 22 durchgehen. Zur erfindungsgemäßen Herstellung der Spreizhülse 20 wird von dem Blechstreifen 22, an dem die Spreizzungen 26 gestanzt sind, ein Abschnitt 28 bspw. durch Schneiden oder Stanzen abgetrennt. Das Trennen erfolgt in Verlängerung eines der Querschlitze 24 bspw. an der in der Zeichnung rechts oben mit der Strichlinie 30 dargestellten Stelle. Es wird also eine ganzzahlige Anzahl Spreizzungen 26 von dem Blechstreifen 22 abgetrennt, der von dem Blechstreifen 22 abgetrennt Abschnitt 28 weist nur ganze Spreizzungen 26 auf. Die Anzahl der Spreizzungen 26 des Abschnitts 28 richtet sich nach einem Durchmesser bzw. Umfang der herzustellenden Spreizhülse 20 und damit nach einem Durchmesser des Ankerbolzens 10 bzw. des Spreizankers 12. Ein Spreizanker 12 mit größerem Durchmesser weist mehr Spreizzungen 26 als ein Spreizanker 12 mit kleinerem Durchmesser auf. Der dargestellte Ankerbolzen 10 weist einen Durchmesser seines Gewindes 16 von bspw. M10 auf. Dieser Gewindedurchmesser wird zugleich als Nenndurchmesser des Spreizankers 12 bzw. zur Angabe der Größe des Spreizankers 12 verwendet. Für diesen Durchmesser weist die Spreizhülse 12 und damit der vom Blechstreifen 22 abgetrennte Abschnitt 28 bspw. vier Spreizzungen 26 auf. Für einen Spreizanker der Größe M8 weist die Spreizhülse 20 und damit der vom Blechstreifen 22 abgetrennte Abschnitt 28 bspw. drei Spreizzungen 26 auf, für die Größen M12 und M16 des Spreizankers 12 sind bspw. Spreizhülsen 12 mit fünf bzw. sechs Spreizzungen 26 vorgesehen. Diese Angaben gelten beispielhaft für ein Ausführungsbeispiel der Erfindung.

Der vom Blechstreifen 22 abgetrennte Abschnitt 28 wird um den Ankerbolzen 10 zu einer rohrförmigen Spreizhülse 20 gebogen. Dabei ist der Abschnitt 28 bzw. die Spreizhülse 20 so angeordnet, dass sie auf den Spreizkonus 18 aufschiebbar ist. Die freien Enden der Spreizzungen 26 sind dem Spreizkonus 18 zugewandt. Durch die Querschlitze 24 zwischen den Spreizzungen 26 lassen sich die Spreizzungen 26 durch Aufschieben auf den Spreizkonus 18 auseinander drücken und die Spreizhülse 20 aufweiten bzw. aufspreizen. Da die Spreizhülse 20 nur ganze Spreizzungen 26 aufweist ist ihr Umfang ein ganzzahliges Vielfaches einer Breite einer Spreizzunge 26 und eines Querschlitzes 24. Da die Spreizhülse 20 an der Stelle 30, an der Sie vom Blechstreifen 22 getrennt worden ist, einen durchgehenden Schlitz 30 aufweist, ist eine Anpassung an den Durchmesser des Ankerbolzens 10 problemlos möglich.

Zur Verankerung wird der Ankerbolzen 10 mit dem Spreizkonus 18 voraus in ein nicht dargestelltes, hinterschnittenes oder nicht-hinterschnittenes Bohrloch eingesetzt, so dass auch die Spreizhülse 20 vollständig in das Bohrloch eintaucht. Der Ankerbolzen 10 wird in der Spreizhülse 20 zurückgezogen, so dass die Spreizhülse 20 mit ihren Spreizzungen 26 auf den Spreizkonus 18 gleitet und damit aufgeweitet und aufgespreizt wird. Der Spreizanker 12 wird dadurch im Bohrloch verankert.

## Patentansprüche

1. Verfahren zur Herstellung einer Spreizhülse für einen Spreizanker, wobei an einem Blechstreifen (22) durch Stanzen von nicht durchgehenden Quer- oder Schrägschlitzen (24) Spreizzungen (26) gestanzt, ein Abschnitt mit einer einem Umfang der herzustellenden Spreizhülse (20) entsprechenden Länge von dem Blechstreifen (22) abgetrennt und zu einer Spreizhülse (20) umgeformt wird.

2. Verfahren nach Anspruch 1, **dadurch gekennzeichnet, dass** eine ganzzahlige Anzahl Spreizzungen (26) von dem Blechstreifen (22) abgetrennt wird.

3. Spreizhülse für einen Spreizanker, wobei die Spreizhülse aus einem Abschnitt (28) eines Blechstreifens (22) besteht, an dem durch Stanzen von nicht durchgehenden Quer- oder Schrägschlitzen (24) Spreizzungen (26) gestanzt sind, wobei der Abschnitt (28) mit einer einem Umfang der Spreizhülse (20) entsprechenden Länge von dem Blechstreifen (22) abgetrennt und zu der Spreizhülse (20) umgeformt ist.

4. Spreizhülse nach Anspruch 3, **dadurch gekennzeichnet, dass** die Spreizhülse (20) ausschließlich ganze Spreizzungen (26) aufweist.
